# EUROPEAN PATENT SPECIFICATION

(11) **EP 1 745 913 B1**
(45) Date of publication and mention of the grant of the patent: **19.02.2014**
(21) Application number: 06380183.1
(22) Date of filing: 29.06.2006
(51) Int. Cl.: B29C 45/30, B29C 45/26, B29C 33/30

(54) **Mold with detachable parts for plastic material pieces**
Formwerkzeug mit abnehmbaren Teilen für Kunststoffgegenstände
Moule avec des parties détachables pour articles en matière plastique

(30) Priority: 14.07.2005 ES 200501711
(43) Date of publication of application: 24.01.2007
(73) Proprietor: Möllertech Orense, S.L., 32710 Pereiro de Aguiar (Orense) (ES)
(72) Inventor: Gonzalez Lopez, Alberto, 01470 Amurrio (Alava) (ES)
(74) Representative: Isern-Jara, Nuria

(56) References cited:
- PATENT ABSTRACTS OF JAPAN vol. 004, no. 108 (M-024), 5 August 1980 (1980-08-05) -& JP 55 067425 A (KASAI KOGYO CO LTD), 21 May 1980 (1980-05-21)
- PATENT ABSTRACTS OF JAPAN vol. 013, no. 154 (M-814), 14 April 1989 (1989-04-14) -& JP 63 315210 A (HITACHI LTD), 22 December 1988 (1988-12-22)
- PATENT ABSTRACTS OF JAPAN vol. 013, no. 244 (M-834), 7 June 1989 (1989-06-07) -& JP 01 053817 A (MITSUBISHI ELECTRIC CORP), 1 March 1989 (1989-03-01)

## Description

### PURPOSE OF THE INVENTION

The purpose of this Invention is a mold with detachable parts for plastic material pieces which, for the function for which it is intended, offers several advantages that will be described hereinafter, apart from others inherent in its organization and constitution.

Specifically, the invention consists of equipment capable of fabricating, with rapid adaptation in the same mold, simple plastic pieces, and pieces with a barrier element on the non-visible side of the piece.

### BACKGROUND OF THE INVENTION

At present, as reference to the state of the art, it should be mentioned that plastic injection molds are able to fabricate a single type of piece, or at most equal pieces with slight variations thanks to the use of detachable parts or elements, which can alter the shape of the piece in very specific areas, e.g. make or remove holes.

As a result, there are currently available on the market standard injected plastic pieces, injected plastic pieces with a decorative element on the visible surface (e.g., fabric, PVC film, wood, etc.) - this decorative element would be over-injected together with the plastic in a single machine cycle - and finally plastic pieces with a over-injected element but on the non-visible side of the piece.

In short, up to now not only have there been separate molds for each piece, but also each mold has an essentially different morphology.

JP-A-55067425 **discloses a mold for producing multilayered articles, the mold having loose detatchable parts replacable by others suitable stored outside the mold and exchangable detatchable parts replaceable and stored inside the mold.**

### DESCRIPTION OF THE INVENTION

The mold with detachable parts for plastic material pieces, covered by this invention, consists of equipment that is able to fabricate, with rapid adaptation in the same mold, plastic pieces with decorative elements on the visible surface of the piece, simple plastic pieces, and pieces with a barrier element on the non-visible side of the piece, this mold having four devices for inserting and/or replacing detachable parts, for the three configurations or typologies of pieces described above, and these four devices include loose, exchangeable, sliding and rotating detachable parts, wherein
- the loose detachable parts are replacable by others suitably stored outside the mold,
- the exchangeable detachable parts are replacable and stored inside the mold proper, either with a fastening system or else with a sliding system on rails,
- the sliding detachable parts are changeable with an internal mold operation, which would change them by moving and adapting them to the different configurations,
- the rotating detachable parts are pyramid-shaped and are movable towards the outside of the mold, reaching a limit where they are allowed to rotate and take on a different configuration.

Of note is that fact that all or just some of these detachable part solutions could be used in one mold.

To complement the following description and to help better understand the features, this description is accompanied by a set of drawings whose figures, on an illustrative but not limitative basis, show the most significant details of the invention.

### BRIEF DESCRIPTION OF THE FIGURES

Figure 1. Shows a perspective of the mold of the invention.
Figure 2. Shows a cross section, as indicated in A-A in Figure 1.
Figure 3. Shows a cross section, as indicated in B-B in Figure 1.
Figure 4. Shows a side view of the mold.
Figures 5.1, 5.2 and 5.3. Show configurations or types of pieces obtained with the mold of the invention.

### DESCRIPTION OF A SAMPLE EXECUTION OF THE INVENTION

Based on the above mentioned figures and in accordance with the numbering used, a sample execution of the invention can be seen in these figures, which is a mold -1- with detachable parts for plastic material pieces, consisting of equipment capable of fabricating, with rapid adaptation in the same mold, plastic pieces with decorative elements on the visible surface of the piece, simple plastic pieces, and pieces with a barrier element on the non-visible side of the piece, with the particularity that this mold has four devices for installing and/or replacing detachable parts, for the three configurations or typologies of pieces described above, using all or only some in one mold.

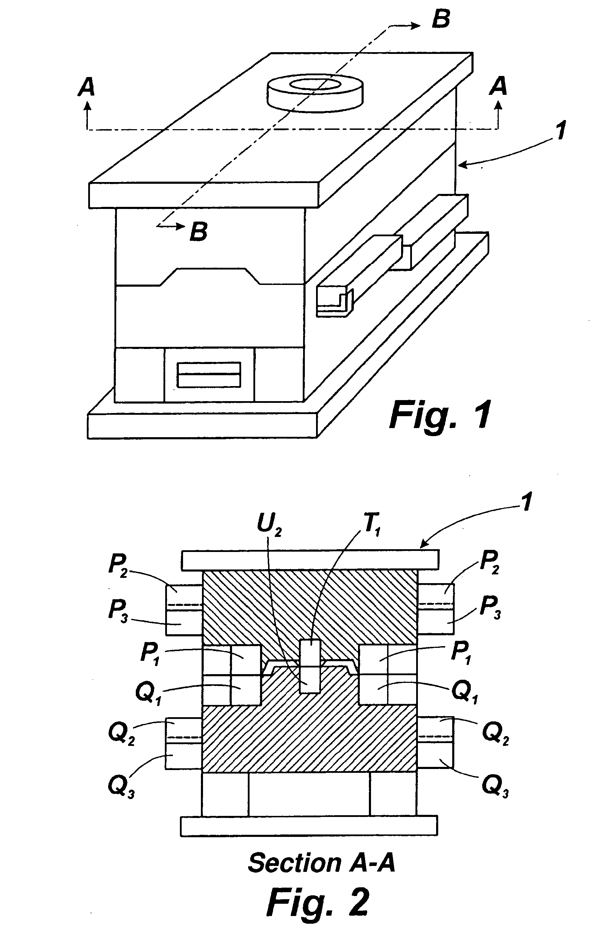

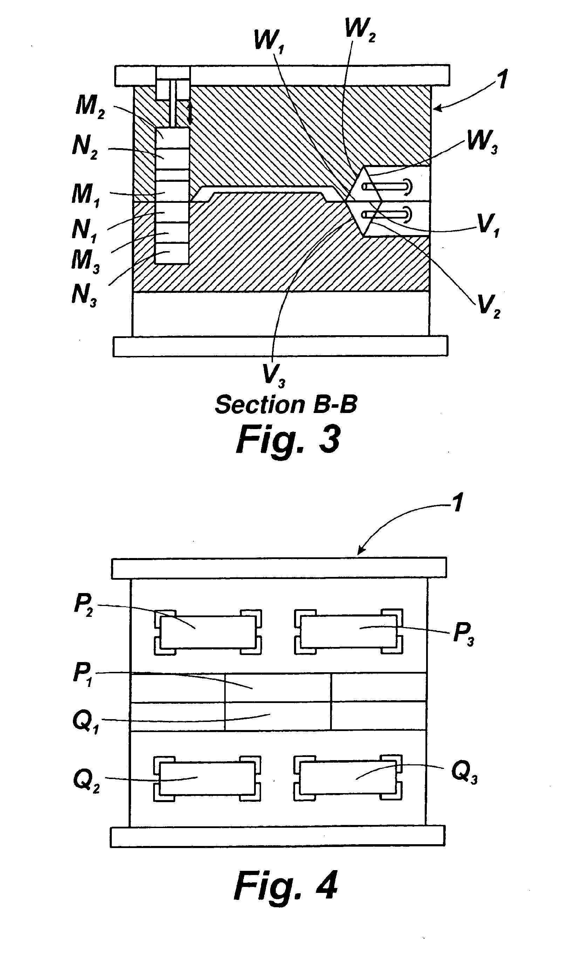

These four devices include loose, exchangeable, sliding and rotating detachable parts, as indicated in Figures 1 to 4.

### Loose Detachable Parts

T₁, T₂ (not shown), T₃ (not shown)
U₁ (not shown), U₂, U₃(not shown)

### Exchangeable Detachable Parts

P₁, P₁' (not shown), Q₁, Q₁'(not shown) are Cavity fabrik
P₂, P₂' (not shown), Q₂, Q₂'(not shown) are Only plastic
P₃, P₃' (not shown), Q₃, Q₃' (not shown) are Core barrier
P and P' (not shown) are R (Single detachable part, all cavity)
Q and Q' (not shown) are S (Single detachable part, all core)

### Sliding Detachable Parts

M₁and N₁ are Cavity fabrik
M₂ and N₂ are Only plastic
M₃ and N₃ are Core barrier

### Rotating Detachable Parts

W₁ and V₁ are Cavity fabrik
W₂ and V₂ are Only plastic
W₃ and V₃ are Core barrier

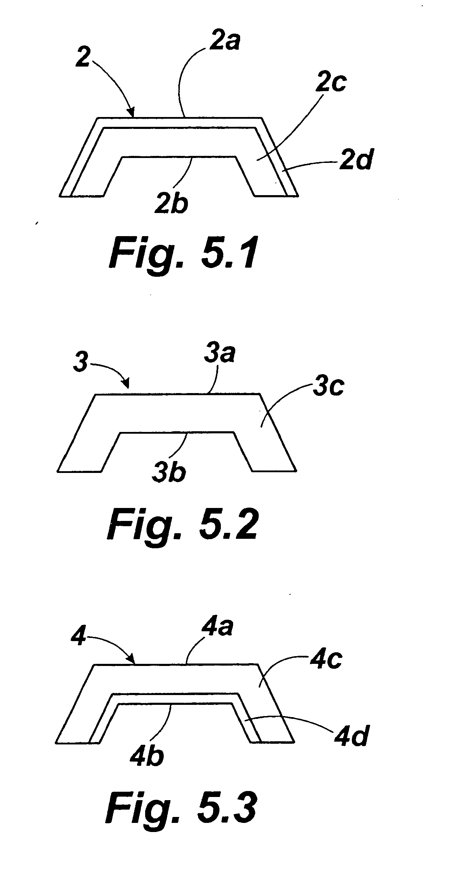

The three types of pieces -2-3-4- obtained with this mold -1- are shown respectively in Figures 5.1, 5.2 and 5.3.

Piece -2- (Fig. 5.1) has a visible side -2a- a hidden side -2b-, plastic material -2c- and a fabric -2d-.

Piece -3- (Fig. 5.2) has a visible side -3a- a hidden side -3b- and plastic material -3c-.

Piece -4- (Fig. 5.3) has a visible side -4a- a hidden side -4b-, plastic material -4c- and a barrier -4d- on the hidden side -4b- of the piece -4-.

## Claims

1. Mold (1) with detachable parts for plastic material pieces, consisting of equipment capable of fabricating, with rapid adaptation in the same mold (1), plastic pieces with decorative elements on the visible surface of the piece, simple plastic pieces, and pieces with a barrier element on the non-visible side of the piece, this mold having four devices for installing and/or replacing detachable parts, for the three configurations or typologies of pieces described above, and these four devices include loose, exchangeable, sliding and rotating detachable parts, wherein
- the loose detachable parts (T₁, T₂, T₃, U₁, U₂, U₃) are replaceable by others suitably stored outside the mold (1),
- the exchangeable detachable parts (P₁, P₂, P₃, Q₁, Q₂, Q₃) are replaceable and stored inside the mold (1), either with a fastening system or else with a sliding system on rails,
- the sliding detachable parts (M₁, M₂, M₃, N₁, N₂, N₃) are changeable with an internal mold operation, which would change them by moving and adapting them to the different configurations,
- the rotating detachable parts (V₁, V₂, V₃, W₁, W₂, W₃) are pyramid-shaped and are movable towards the outside of the mold (1), reaching a limit where they are allowed to rotate and take on a different configuration.

## Patentansprüche

1. Gussform (1) mit abnehmbaren Teilen zum Herstellen von Werkstücken aus Kunststoff, umfassend eine Ausstattung, die in der Lage ist durch eine rasche Anpassung in der Gussform (1) selbst Werkstücke aus Kunststoff mit dekorativen Elementen auf der sichtbaren Oberfläche dieser Werkstücke, einfache Werkstücke aus Kunststoff und Werkstücke aus Kunststoff mit Barriereelementen auf der nicht sichtbaren Seite des Werkstücks herzustellen, wobei diese Gussform vier Vorrichtungen zum Anbringen und/oder Austauschen von abnehmbaren Teilen für die drei zuvor genannten Ausgestaltungen oder Typen von Werkstücken aufweist, und diese vier Vorrichtungen lose, austauschbare, verschieb- und drehbare, abnehmbare Teile umfasst, bei der
- die losen, abnehmbaren Teile (T₁, T₂, T₃, U₁, U₂, U₃) durch andere außerhalb der Gussform (1) in angemessener Weise aufbewahrte Teile ersetzt werden können,
- die austauschbaren, abnehmbaren Teile (P₁, P₂, P₃, Q₁, Q₂, Q₃) ersetzt und innerhalb der Gussform (1) aufbewahrt werden können, entweder durch ein Befestigungssystem oder durch ein Schiebesystem auf Schienen,
- die verschiebbaren, abnehmbaren Teile (M₁, M₂, M₃, N₁, N₂, N₃) in einem internen Arbeitsgang in der Gussform ausgetauscht werden können, indem sie durch Verschiebung an die unterschiedlichen Ausgestaltungen angepasst werden,
- die drehbaren, abnehmbaren Teile (V₁, V₂, V₃, W₁, W₂, W₃) pyramidenförmig sind und zur Außenseite der Gussform (1) geschoben werden können, wo sie gedreht und eine andere Einstellung annehmen können.

## Revendications

1. Moule (1) avec des parties démontables, pour pièces en matière plastique, comprenant un équipement capable de fabriquer, par une adaptation rapide dans le moule lui-même (1), des pièces en matière plastique dotées d'éléments décoratifs sur la surface visible de la pièce, des pièces en plastique simples et des pièces présentant un élément barrière sur le côté non visible de la pièce. Ledit moule est pourvu de quatre dispositifs permettant d'installer et/ou de remplacer des parties démontables, pour les trois configurations ou typologies de pièces décrites précédemment ; ces quatre dispositifs incluant des parties démontables indépendantes, interchangeables, coulissantes et rotatives, où :
- les parties démontables indépendantes (T₁, T₂, T₃, U₁, U₂, U₃) peuvent être remplacées par d'autres correctement stockées à l'extérieur du moule (1) ;
- les parties démontables interchangeables (P₁, P₂, P₃, Q₁, Q₂, Q₃) peuvent être remplacées et stockées à l'intérieur du moule (1), avec un système de fixation ou avec un système de glissement sur guides ;
- les parties démontables coulissantes (M₁, M₂, M₃, N₁, N₂, N₃) sont interchangeables grâce à une opération interne du moule qui procède à leur remplacement en les déplaçant et en les adaptant aux différentes configurations ;
- les parties démontables rotatives (V₁, V₂, V₃, W₁, W₂, W₃) ont une forme pyramidale et sont déplaçables vers l'extérieur du moule (1), atteignant une limite où elles peuvent tourner et adopter une configuration différente.
